# FASCICULE DE BREVET EUROPEEN

(11) **EP 1 994 750 B1**
(45) Date de publication et mention de la délivrance du brevet: **03.05.2017**
(21) Numéro de dépôt: 07726825.8
(22) Date de dépôt: 13.03.2007
(51) Int. Cl.: H04N 7/173

(54) **MÉTHODE DE VALIDATION D'ACCÈS À UN PRODUIT PAR UN MODULE DE SÉCURITÉ**
VERFAHREN ZUM VALIDIEREN DES ZUGRIFFS AUF EIN PRODUKT DURCH EIN SICHERHEITSMODUL
METHOD FOR VALIDATING ACCESS TO A PRODUCT BY A SECURITY MODULE

(30) Priorité: 13.03.2006 EP 06290423
(43) Date de publication de la demande: 26.11.2008
(73) Titulaire: Nagravision S.A., 1022 Cheseaux-sur-Lausanne (CH)
(72) Inventeur: PARISOT, Laurence, 78140 Vélizy (FR)
(74) Mandataire: Leman Consulting S.A.
(86) Numéro de dépôt international: PCT/EP2007/052319
(87) Numéro de publication internationale: WO 2007/104749

(56) Documents cités:
- EP-A- 1 398 966
- US-A1- 2004 068 541
- US-A1- 2006 015 580
- US-B1- 6 810 525
- US-B1- 6 983 480
- STOW R G ET AL: "Eurocrypt-a versatile conditional access system for MAC broadcasts" IEEE, 6 juin 1989 (1989-06-06), pages 278-279, XP010085489
- "FUNCTIONAL MODEL OF A CONDITIONAL ACCESS SYSTEM" EBU REVIEW- TECHNICAL, EUROPEAN BROADCASTING UNION. BRUSSELS, BE, no. 266, 21 décembre 1995 (1995-12-21), pages 64-77, XP000559450 ISSN: 0251-0936

## Description

La présente invention concerne le domaine de la télévision numérique à péage où des utilisateurs acquièrent des droits de consommation de produits diffusés contre un paiement. Ce dernier est débité d'un crédit stocké dans un module de sécurité associé à une unité d'utilisateur ou décodeur.

### Arrière plan technique

Le rôle d'un module de sécurité est de contrôler l'accès à un flux transportant des données numériques encryptées mises à disposition d'utilisateurs par un serveur de diffusion. En l'occurrence, dans le domaine de la télévision à péage, un décodeur permet d'accéder et de décrypter le flux de données audio/vidéo encryptées diffusé en fonction de droits enregistrés dans le module de sécurité associé audit décodeur.

Un module de sécurité se présente généralement sous la forme d'un module électronique protégé et réputé inviolable comme par exemple une carte à microprocesseur amovible insérée dans un lecteur approprié qui la connecte au décodeur.

Ce module de sécurité, équipé d'interfaces de communication, reçoit à partir d'un centre de gestion des messages destinés à gérer des droits d'accès aux données diffusées. Ces messages sont appelés messages d'administration ou de gestion EMM (Entitlement Management Message).

Le document WO03/085959 décrit un système comprenant un centre de gestion transmettant un flux de données encryptées par des mots de contrôle inclus dans des messages de contrôle (ECM). Le flux de données est destiné à au moins une unité d'utilisateur reliée à un module de sécurité identifié par une adresse unique. Ce module contient un crédit qui est décrémenté selon l'achat de produits ou de la consommation du flux de données. Pour recharger le crédit, l'utilisateur communique au centre de gestion un identifiant représentatif de l'adresse unique du module de sécurité et un code valeur représentant le montant de recharge. Le centre de gestion traite et vérifie le code valeur avant de transmettre au module de sécurité un message de gestion (EMM) encrypté permettant de recharger le crédit.

Lorsque le crédit est suffisant dans le module de sécurité deux modes d'achats sont possibles, à savoir:
- achat en local: l'utilisateur décide d'utiliser tout ou partie de son crédit pour acheter un produit. Ainsi, un nouveau droit est créé dans le module de sécurité pour la réception dudit produit après décrémentation du crédit.
- achat via le centre de gestion : l'utilisateur appelle le centre de gestion pour acheter un produit. Le centre de gestion envoie alors un message de gestion (EMM) encrypté contenant le droit d'accès audit produit ainsi que le montant à décrémenter du crédit du module de sécurité.

L'achat s'effectue dans les deux cas par le traitement de messages contenant un droit pour un produit ainsi que le coût correspondant. Si le crédit disponible est suffisant, le module de sécurité traite le message c'est-à-dire décrémente le crédit et valide le droit. Celui-ci libère l'accès à un produit diffusé lors de sa réception.

Dans le cas où le crédit stocké dans le module de sécurité serait insuffisant, le message de gestion EMM reçu est rejeté et l'accès au produit demandé impossible. Le même effet peut aussi se produire lorsque l'unité de l'utilisateur est mise hors service et de ce fait incapable de valider le droit requis. Le système de contrôle d'accès et le centre de gestion n'ont de ce fait aucune information sur l'utilisation réelle du crédit, ce qui représente un inconvénient lorsqu'il s'agit d'établir des décomptes pour les fournisseurs des produits.

Comme les unités d'utilisateurs ne disposent pas d'une voie de retour directe vers le système de contrôle d'accès, le taux de consommation effective des produits par rapport aux messages envoyés ne peut pas être déterminé. En effet, les messages émis étant plus nombreux que ceux effectivement traité localement pour libérer l'accès au produit, le centre de gestion risque de payer aux fournisseurs des excédants de droits et/ou de produits qui n'ont jamais été consommés, ni payés par les utilisateurs.

Lors d'un achat via le centre de gestion, l'utilisateur transmet une requête comprenant un identifiant du module de sécurité et un code relatif au produit ou au service sélectionné. Dans les cas où cette transmission s'effectue via une voie de retour indépendante du canal de réception des données diffusées, comme par exemple une communication de la requête par téléphone ou par message court SMS, une vérification de concordance de l'identifiant du module de sécurité avec l'utilisateur effectif ne peut pas être effectuée. En effet, il serait possible de générer des codes de services et de produits avec des identifiants de module de sécurité à l'aide d'un logiciel adéquat par exemple, et de les transmettre au centre de gestion. Ce dernier analyse ces requêtes, accepte celles dont l'identifiant de module de sécurité est connu de la base de données du centre pour diffuser des messages d'administration EMM destinées aux unités relatives aux identifiant de module de sécurité reconnus. Lors de la réception de ces messages EMM, les modules de sécurité correspondants aux identifiants de module reconnus vont voir leurs crédits débités à l'insu des utilisateurs des unités concernées. Une erreur de saisie du code de la part de l'utilisateur peut également aboutir à la transmission d'un message EMM entraînant le débit inopportun d'un crédit d'une unité d'une autre personne. La probabilité d'un tel débit s'accroît proportionnellement au nombre d'unités en service dans le réseau.

Le document US6810525 décrit une méthode et un système d'achat impulsif de services via un réseau de communication. Une requête d'achat d'un service est transmise par un terminal d'abonné à un centre de contrôle d'accès qui génère un message encrypté incluant un identificateur de service et des droits associés. Le terminal reçoit ce message accompagné du coût du service sélectionné et vérifie si le crédit disponible est suffisant. En cas de succès de la vérification, un jeton sécurisé est généré par une application du terminal. Ce jeton est envoyé à un serveur du réseau pour déterminer l'état des droits de l'abonné avant le traitement de la requête d'achat par le centre de contrôle d'accès Ce système d'achat de services s'applique à une configuration en réseau bidirectionnel dans laquelle les terminaux d'abonnés sont connectés en permanence au centre de contrôle d'accès et au serveur de vérification des jetons. Il constitue une solution au problème de débits indésirables d'autres utilisateurs car il utilise une transmission point à point des jetons de vérification utilisant de préférence une voie de retour dépendante du terminal. Par contre, la méthode peut difficilement s'exécuter automatiquement dans un système de diffusion avec une voie de retour indépendante du terminal utilisée pour l'envoi des requêtes seules. Une exécution manuelle impliquerait la transmission par l'utilisateur de deux messages: la requête d'achat et le jeton généré par le terminal. Cette méthode deviendrait ainsi fastidieuse et inconfortable pour l'achat spontané et rapide de services disponibles en ligne.

Le document EP1398966 décrit un système de transaction effectuée par un utilisateur d'un récepteur sans voie de retour. Le système comprend un centre de diffusion (head-end), un réseau de communication et un récepteur équipé d'un affichage apte à recevoir des données numériques transmises par le centre de diffusion via le réseau de communication. Le récepteur comprend un module de sécurité configuré de manière à afficher un premier code unique d'identification du module destiné à créer un jeton de transaction. Un second code identifiant un service ou un produit à commander est également affiché, ce code étant inclus dans les données du produit diffusé. Lors de l'achat, l'utilisateur sélectionne un produit dont il transmet le code d'identification et le prix conjointement au code unique du module de sécurité (jeton de transaction) au centre de diffusion. Cette transmission s'effectue par une voie indépendante du récepteur telle que le téléphone vocal, message court SMS ou autre. Le centre de diffusion décode le jeton et libère le produit après reconnaissance sur une base de données de l'identificateur du module sécurité extrait du jeton.

Ce système est exposé au problème de débits indésirables d'autres utilisateurs par la transmission de codes d'identifications pouvant être reconnu par le centre de diffusion et correspondant à des modules de sécurité en service. Comme il s'agit d'une transmission de données en mode diffusion, les messages d'administration permettant de libérer le visionnement des produits et de débiter un crédit sur un récepteur donné sont diffusés vers tous les récepteurs du réseau. L'encryption des jetons mentionnée dans le document EP1398966 peut constituer une solution à ce problème. Cependant, les clés d'encryption et des identifiants de modules de sécurité peuvent être déterminés par des tiers mal intentionnés qui peuvent ainsi générer des jetons de manière systématique pour provoquer des débits dans un nombre plus ou moins élevé de récepteurs.

Le document US2006/015580A1 décrit un système comprenant un serveur multimédia, une base de données de profiles d'utilisateurs et un serveur d'application connecté à un ou plusieurs réseaux de communication. A la réception d'une requête de visionnement d'un contenu transmise par une unité d'utilisateur, le serveur d'application sollicite la base de données de profil d'utilisateur pour déterminer le propriétaire de l'unité d'utilisateur et ses droits d'accès au contenu en se basant sur un identificateur de l'unité d'utilisateur transmis dans la requête. Le serveur d'application sollicite le serveur multimédia pour diffuser un flux de format approprié transportant le contenu requis pour visionnement.

### Description sommaire de l'invention

Le but de la présente invention est de pallier les inconvénients soulevés ci-dessus en permettant au centre de gestion d'assurer un meilleur contrôle des droits fournis aux utilisateurs par le biais des messages d'administration. En effet, le centre de gestion transmet les messages uniquement lorsque le crédit stocké dans le module de sécurité de l'unité d'utilisateur est suffisant.

Un autre but est de fournir une parade contre les débits abusifs des crédits provoqués par la transmission de requêtes factices contenant des identifiants de modules de sécurité reconnus par le centre de gestion.

Ce but est atteint par une méthode de validation d'accès à un produit par un module de sécurité associé à une unité d'utilisateur connectée, de manière unidirectionnelle, à un système de contrôle d'accès transmettant des messages de gestion destinés audit module de sécurité, lesdits messages étant générés par le système de contrôle d'accès à la suite de la réception d'une requête d'un droit d'accès à un produit consistant en des données numériques diffusées, ladite méthode comprenant les étapes suivantes:
- achat d'un produit proposé par l'unité d'utilisateur et vérification par le module de sécurité, que le montant associé au produit est couvert par un crédit restant,
- dans l'affirmative, détermination d'un code représentatif du produit acheté,
- affichage dudit code sur un organe de visualisation associé à l'unité d'utilisateur,
- transmission au centre de gestion, via un canal indépendant de l'unité d'utilisateur, d'une requête comprenant au moins ledit code et un identifiant représentatif de l'identifiant du module de sécurité,
- vérification par le système de contrôle d'accès de la validité du code et de l'identifiant du module de sécurité, transmission d'un message de confirmation de droit à destination de l'unité d'utilisateur associée audit module de sécurité,
est caractérisée en ce que, lors de l'achat du produit, un droit temporaire est inscrit dans le module de sécurité lorsque le crédit restant est égal ou supérieur au montant associé audit produit, ledit droit temporaire étant remplacé par un droit définitif par le message de confirmation de droit reçu du centre de gestion, ledit droit définitif autorisant l'accès au produit acheté en débitant le montant associé audit produit.

La solution consiste à prouver au système de contrôle d'accès que le module de sécurité est effectivement apte à créer un droit pour l'acquisition d'un produit sélectionné. Lors de l'achat du produit, le montant associé audit produit est comparé avec un crédit restant dans le module de sécurité. Lorsque le crédit restant est supérieur ou égal au montant associé au produit, un droit temporaire est stocké dans le module de sécurité. Un code identifiant ce droit propre au produit est associé au numéro unique identifiant le module de sécurité puis transmis au centre de gestion sous forme de requête de droit. A la réception de la requête, le système de contrôle d'accès génère un message de confirmation de droit comprenant le droit définitif et le code identifiant comme condition d'accès au droit définitif. Le module de sécurité reçoit ce message de confirmation et remplace le droit temporaire par le droit définitif du message seulement si le code identifiant correspond au droit temporaire. L'accès au produit est ainsi autorisé. Dans le cas contraire d'un identifiant de droit définitif différent ou non compris dans les droits temporaires, le message de gestion est rejeté et l'accès au produit est refusé par défaut d'un droit valide.

L'avantage de cette méthode est que le message de confirmation est généré et transmis par le système de contrôle d'accès seulement si la vérification du crédit du module de sécurité a pu être effectuée avec succès. Autrement dit, en cas de crédit initial insuffisant par rapport à celui exigé par le produit, une requête au centre de gestion ne peut être générée.

Le centre de gestion et le système de contrôle d'accès sont en général deux entités séparées. La première consiste en une interface avec l'utilisateur gérant les requêtes de droits, tandis que la seconde génère les messages de gestion à destination des unités d'utilisateurs selon les requêtes reçues de la première entité. Dans certaines configurations ces deux entités peuvent être regroupées dans un système de gestion global.

Cette méthode résout le problème de débits indésirables d'autres utilisateurs car le droit définitif d'accès au produit acheté n'est attribué qu'à l'unité dont le module de sécurité contient le droit temporaire correspondant au produit sélectionné. Les unités ne possédant pas ce droit ou possédant un autre droit correspondant à un module de sécurité et/ou un produit différent ne seront pas affectées par le message de confirmation de droit. Ainsi pour qu'un crédit soit débité définitivement il faut la condition supplémentaire de la présence du droit temporaire correspondant à un produit et à un module de sécurité donné.

### Brève description des figures

L'invention sera mieux comprise grâce à la description détaillée qui va suivre et qui se réfère aux figures annexées données à titre d'exemples nullement limitatif.
- La figure 1 illustre un schéma bloc d'un système exécutant une première variante de la méthode dans laquelle une requête d'un droit d'accès adressée au centre de gestion comprend un code d'achat propre au produit acheté.
- La figure 2 illustre un schéma bloc d'un système exécutant une seconde variante de la méthode dans laquelle une requête d'un droit d'accès adressée au centre de gestion comprend un code d'achat calculé à partir des identifiants du module de sécurité et du produit.

### Description détaillée de l'invention

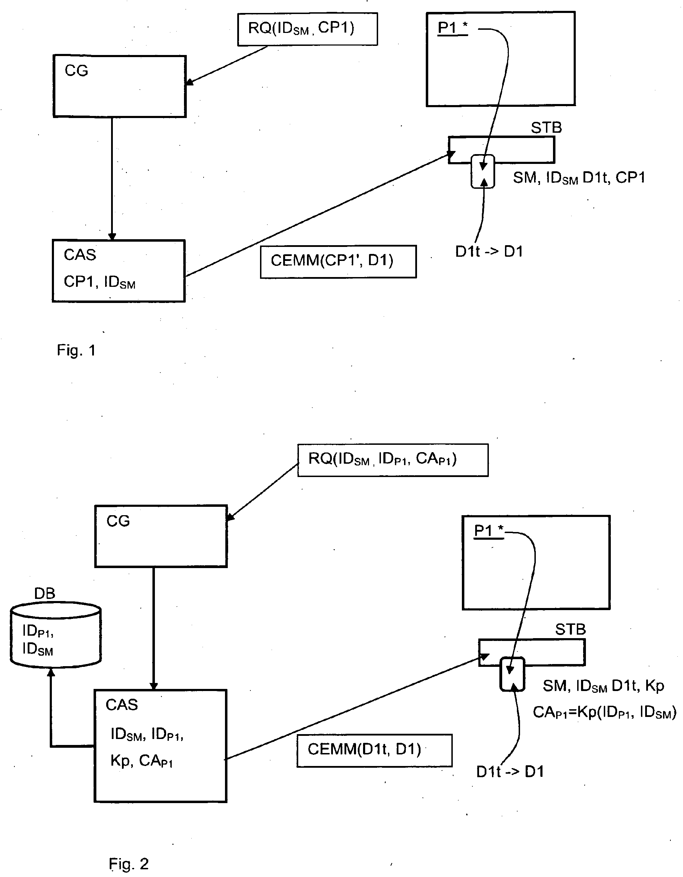

Dans la première variante de la méthode schématisée par la figure 1, un produit (P1) est sélectionné par l'utilisateur dans une liste affichée sur un écran de télévision par exemple. L'achat du produit enclenche un processus de vérification d'un crédit stocké dans le module de sécurité (SM) associé à l'unité d'utilisateur (STB) ou décodeur, ce crédit devant être supérieur ou égal au coût du produit (P1) sélectionné. Dans une variante et notamment dans le cas d'achats simultanés de plusieurs produits, les montants des coûts correspondants peuvent être mémorisés dans un registre de crédits engagés, le crédit restant étant provisoirement débité. Ce processus correspond à un achat provisoire de produits qui sera validé par la suite par le système de contrôle d'accès (CAS).

Un droit temporaire (D1t) est inscrit dans le module de sécurité (SM) lorsque la montant du produit (P1) correspond à un débit inférieur ou égal au crédit restant dans le module (SM). Un code (CP1) propre au produit (P1) acheté est soit généré à partir du droit temporaire (D1t), soit extrait de la description du produit (P1). Selon un exemple de configuration, ce code peut être mémorisé par le module de sécurité (SM) et associé au droit temporaire (D1t) lorsque le débit a été effectué.

Une application installée dans le décodeur (STB) permet d'afficher ce code pour l'utilisateur, par exemple sur un écran de télévision ou sur un affichage graphique séparé. Pour confirmer l'achat, l'utilisateur transmet ce code (CP1) au centre de gestion (CG) avec l'identifiant de son module de sécurité (ID_{SM}).

Ce message RQ(ID_{SM}, CP1) est transmis à un centre de gestion (CG) via un canal de communication généralement indépendant du décodeur (STB), par exemple via le réseau téléphonique fixe ou mobile, Internet ou autre canal de transmission.

La requête RQ(ID_{SM}, CP1) peut être transmise soit dans un message court SMS, par le biais d'un serveur vocal, par courrier électronique ou sur tout autre support accepté par le centre de gestion (CG).

Selon un exemple de réalisation, le décodeur transmet la requête à un téléphone mobile via une liaison sans fil du type Bluetooth ou infrarouge IrDA (Infrared Data Association). Un message court (SMS) est ensuite créé à partir des données reçues et transmis au centre de gestion via le réseau mobile.

Selon un autre exemple, le décodeur est équipé d'une connexion temporaire avec le centre de gestion établie seulement pour la transmission de la requête.

Le centre de gestion (CG) fournit les paramètres de la requête au système de contrôle d'accès (CAS) qui vérifie d'abord la conformité de l'identifiant (ID_{SM}) du module de sécurité ainsi que du code produit (CP1). Un résultat positif de la vérification autorise la génération d'un message de confirmation (CEMM) contenant l'identifiant du droit définitif (D1).

Le module de sécurité (SM) reçoit le message (CEMM) par l'intermédiaire du décodeur (STB) et remplace le droit temporaire (D1t) par le droit définitif (D1) si le droit temporaire (D1t) était effectivement stocké dans le module de sécurité (SM). Ainsi l'achat préalable effectué auparavant est validé en autorisant l'accès au produit (P1).

Dans un but de vérification, le message de confirmation comprend de plus un code produit (CP1') et le droit définitif (D1) replace le droit temporaire (D1t) seulement si le code produit (CP1') correspond au produit (P1) acheté précédemment. Dans la variante où le module de sécurité mémorise le code produit (CP1), le code (CP1') retourné par le message de confirmation (CEMM) doit être identique au code (CP1) stocké.

La sécurité de cette première variante de cette méthode peut être mise en cause par une attaque du système consistant en la transmission répétée de requêtes RQ(ID_{SM}, CP1) avec des identifiants (ID_{SM}) de modules de sécurité (SM) valides accompagnés chacun d'un code de produit (CP1) également valide. Ces requêtes risquent de surcharger le système de contrôle d'accès par l'envoi de messages confirmation (CEMM) qui ne seront jamais validés. De plus, les statistiques et le décompte des produits consommés destinés aux fournisseurs seront grandement faussés. En effet, le système de contrôle d'accès (CAS) transmet un nombre important de messages (CEMM) inutiles sans nécessairement autoriser un accès à un produit (P1). Malgré un identifiant de module de sécurité (ID_{SM}) valide, le droit définitif (D1) peut être invalide en ne correspondant à aucun droit temporaire (D1t) et entraînant le rejet, par l'unité (STB) qui le reçoit, du message de confirmation (CEMM).

La parade à cette attaque consiste d'une part à calculer par le module de sécurité (SM) l'identifiant (ID_{D1t}) du droit temporaire à partir de l'identifiant (ID_{P1}) du produit (P1) acheté et de celui du module de sécurité et d'autre part à encrypter cet identifiant du droit temporaire (ID_{D1t}) avec une clé personnelle (Kp) de l'unité d'utilisateur (STB). Le cryptogramme ainsi obtenu forme un code d'achat (CA_{P1}).

La requête RQ(ID_{SM}, CA_{P1,} ID_{P1}) de droit au centre de gestion (CG) comprend alors l'identifiant du module de sécurité (ID_{SM}), le code d'achat (CA_{P1}) et l'identifiant du produit acheté (ID_{P1}). A la réception de la requête RQ(ID_{SM}, CA_{P1}, ID_{P1}), le système de contrôle d'accès (CAS) recalcule le code d'achat (CA_{P1}) connaissant la clé personnelle (Kp) de l'unité d'utilisateur, l'identifiant du produit (ID_{P1}) et l'identifiant du module de sécurité (ID_{SM}). Il peut ainsi déterminer si le code d'achat (CA_{P1}) reçu est valide avant de préparer le message de confirmation (CEMM) en réponse à la requête. En cas de réussite de la comparaison, le système de contrôle d'accès (CAS) transmet le message (CEMM) conditionnel contenant le droit définitif (D1) autorisant l'accès au produit (P1) seulement à l'unité (STB) identifiée par le module de sécurité d'identifiant (ID_{SM}).

Cette variante de la méthode présente l'avantage de rendre l'attaque systématique décrite ci-dessus beaucoup plus difficile car le code d'achat (CA_{P1}) dépend à la fois des identifiants du module de sécurité (ID_{SM}) et du produit (ID_{P1}) et non plus de l'identifiant du produit (ID_{P1}) seul comme dans la variante précédente. Le code d'achat (CA_{P1}) est en outre encrypté avec une clé personnelle (Kp) tenue secrète du module de sécurité (SM).

Cette seconde variante illustrée par la figue 2 permet d'obtenir une sécurité accrue du processus au moyen d'un code d'achat (CA_{P1}) plus évolué qui ne dépend pas uniquement du produit acheté (P1) mais également du module de sécurité (SM). En effet, ce dernier calcule ce code (CA_{P1}) à partir des identifiants du produit (ID_{P1}) et de celui du module de sécurité (ID_{SM}) en les encryptant avec une clé personnelle (Kp) de l'unité d'utilisateur (STB). Le cryptogramme Kp(ID_{P1}, ID_{SM}) ou code d'achat (CA_{P1}) obtenu est affiché sur les moyens de visualisation disponibles afin d'être transmis au centre de gestion (CG) par le canal de communication. Il est à noter que la clé personnelle (Kp) peut être soit du type symétrique, soit asymétrique.

Le centre (CG) achemine la requête RQ(ID_{SM}, CA_{P1}, ID_{P1}) vers le système de contrôle d'accès (CAS) pour vérification de la conformité des identifiants du module de sécurité (ID_{SM}) et du produit (ID_{P1}) ainsi que du code d'achat (CA_{P1}). Ce dernier est recalculé par le système de contrôle d'accès (CAS) puis comparé avec celui contenu dans la requête

Lorsque la validité du contenu du cryptogramme Kp(ID_{P1}, ID_{SM}) est établie, le système de contrôle d'accès (CAS) génère un message de confirmation conditionnel (CEMM) contenant le droit définitif (D1) et un identifiant du droit temporaire (D1t) comme condition d'acceptation du message.

Ce message (CEMM) est de préférence encrypté par une clé personnelle audit module de sécurité (SM). Comme dans la première variante, le droit (D1) du message de confirmation (CEMM) remplace le droit temporaire (D1t) lorsque l'identifiant temporaire est correct. Ce droit (D1) définitif permet l'accès au produit (P1) acheté.

Dans le cas où le message (CEMM) n'est pas reçu par l'unité d'utilisateur (STB) ou pas transmis par le centre de gestion, le droit temporaire (D1t) expire soit au bout d'une période prédéterminée de non réception du message après la création de ce droit (D1t), soit à l'heure de la diffusion du produit (P1) ayant créé ce droit (D1t). Dans cette variante, le code du produit enregistré lors de l'achat contient des informations sur la date et l'heure de diffusion. A l'expiration du droit temporaire (D1t), le montant du crédit restant du module de sécurité est rétabli à la valeur initiale d'avant l'achat du produit (P1) permettant ainsi au module de sécurité d'exécuter une nouvelle validation d'accès à un produit.

Lorsque la vérification ne réussit pas, le système de contrôle d'accès (CAS) ne génère aucun message (CEMM). Si le cryptogramme Kp(ID_{P1}, ID_{SM}) est incorrect, aucun message (CEMM) n'est envoyé et le droit temporaire (D1t) persiste jusqu'à son expiration. Dans les deux cas, l'accès au produit (P1) "pré-acheté" reste interdit par l'absence d'un droit (D1) définitif dans le module de sécurité (SM).

Les deux variantes permettent au système de contrôle d'accès (CAS) de stocker respectivement les identifiants (ID_{SM}, ID_{P1}) du module de sécurité (SM) et du produit acheté (P1) dans une base de données (DB). Cet enregistrement a lieu de préférence lorsque la vérification du code produit (CP1) respectivement du code d'achat (CA_{P1}) a réussi. Il permet d'établir un historique, des décomptes et des statistiques des produits achetés par les unités d'utilisateurs afin de rétribuer les fournisseurs des produits.

Une méthode simplifiée consiste à transmettre au centre de gestion une information représentative du crédit. Avant un achat, l'utilisateur demande la génération d'un code d'achat à l'unité d'utilisateur. Ce code est formé du crédit restant et de l'identifiant du module de sécurité. Il peut être également complété par une valeur temporelle telle que la date.

Ce code est transmis par l'utilisateur avec l'identifiant de son module de sécurité et celui du produit qu'il souhaite acquérir. Le système de contrôle d'accès ou le centre de gestion extrait du code la valeur du crédit en fonction de l'identifiant du module de sécurité reçu. Si le crédit est suffisant par rapport à la valeur du produit, un message d'achat correspondant, contenant le droit et le montant du produit, est envoyé à destination du module de sécurité. Celui-ci vérifie qu'effectivement le crédit est suffisant pour le produit souhaité avant de mémoriser le droit et ainsi permettre l'accès au produit.

Il est à noter que cette méthode simplifiée n'est pas plus sûre que la première variante de la figure 1 en étant tout aussi vulnérable à l'attaque consistant à saturer le système de contrôle d'accès comme décrit plus haut.

## Revendications

1. Méthode de validation d'accès à un produit (P1), par un module de sécurité (SM) associé à une unité d'utilisateur (STB) connectée, de manière unidirectionnelle, à un système de contrôle d'accès (CAS) transmettant des messages de gestion destinés audit module de sécurité (SM), lesdits messages étant générés par le système de contrôle d'accès (CAS) à la suite de la réception d'une requête d'un droit d'accès à un produit consistant en des données numériques diffusées, ladite méthode comprenant les étapes suivantes:
- achat d'un produit (P1) proposé par l'unité d'utilisateur et vérification par le module de sécurité (SM), que le montant associé au produit (P1) est couvert par un crédit restant,
- inscription d'un droit temporaire (D1t) dans le module de sécurité (SM) lorsque le crédit restant est égal ou supérieur au montant associé audit produit (P1),
- détermination d'un code (CP1) représentatif du produit (P1) acheté,
- formation d'une requête (RQ) comprenant au moins ledit code (CP1) et un identifiant (ID_{SM}) du module de sécurité (SM),
- transmission à un centre de gestion (CG) associé au système de contrôle d'accès (CAS), via un canal indépendant de l'unité d'utilisateur (STB), de la requête (RQ)
- vérification par le système de contrôle d'accès (CAS) de la validité du code (CP1) et de l'identifiant du module de sécurité (ID_{SM}), génération et transmission d'un message de confirmation de droit (CEMM) comprenant un code produit (CP1') à destination de l'unité d'utilisateur (STB) associée audit module de sécurité (SM) seulement si la vérification de la validité du code (CP1) et de l'identifiant du module de sécurité (ID_{SM}) est réussie,
la méthode est **caractérisée en ce que** ledit droit temporaire (D1t) est remplacé par un droit définitif (D1) lorsque le message de confirmation de droit (CEMM) transmis par le système de contrôle d'accès (CAS) est reçu par l'unité d'utilisateur (STB) et lorsque le code produit (CP1') correspond au produit (P1) acheté, ledit droit définitif (D1) autorisant l'accès au produit (P1) acheté en débitant le montant associé audit produit (P1).

2. Méthode selon la revendication 1, **caractérisée en ce que** le code produit (CP1') correspond au code (CP1) transmis dans la requête adressée au centre de gestion.

3. Méthode selon l'une des revendications 1 ou 2, **caractérisée en ce que** le code (CP1) est contenu dans un message de gestion général relatif au produit (P1) diffusé ou à diffuser.

4. Méthode selon l'une des revendications 1 à 3, **caractérisée en ce que** la requête (RQ) est transmise au centre de gestion (CG) soit par téléphone sous forme d'un message court ou par le biais d'un serveur vocal, soit par courrier électronique ou tout autre canal supporté par le centre de gestion.

5. Méthode selon l'une des revendications 1 ou 2, **caractérisée en ce que** le code consiste en un cryptogramme Kp(ID_{SM}, IDP1), formé par un identifiant (IDP1) du produit (P1) acheté et l'identifiant (ID_{SM}) du module de sécurité (SM) encryptés avec une clé (Kp) personnelle de l'unité d'utilisateur (STB).

6. Méthode selon la revendication 4 **caractérisée en ce que** la requête (RQ) comprend de plus l'identifiant (IDP1) du produit (P1) acheté.

7. Méthode selon l'une des revendications 1 à 6, **caractérisée en ce que** le système de contrôle d'accès (CAS) vérifie la conformité du code (CP1) ou du cryptogramme Kp(ID_{SM}, IDP1) et la conformité de l'identifiant du module de sécurité (SM) et autorise l'envoi du message de conformation (CEMM) audit module de sécurité (SM) seulement si la vérification est positive.

8. Méthode selon l'une des revendications 5 à 7, **caractérisée en ce que** le système de contrôle d'accès (CAS), à la réception de la requête (RQ), recalcule le cryptogramme Kp(ID_{SM}, IDP1) à partir des identifiants (ID_{SM}, IDP1) du module de sécurité et du produit et le compare avec le cryptogramme contenu dans la requête (RQ), lorsque le résultat de la comparaison est positif, le système de contrôle d'accès (CAS) transmet un message de confirmation (CEMM) contenant un droit définitif (D1) et un identifiant du droit temporaire (D1t) comme condition d'acceptation dudit message.

## Patentansprüche

1. Verfahren zur Berechtigung zum Zugriff auf ein Produkt (P1), über ein Sicherheitsmodul (SM), das mit einer Benutzereinheit (STB) verbunden ist, die unidirektional mit einem Zugangskontrollsystem (CAS) verbunden ist, das Verwaltungsnachrichten überträgt, die für das Sicherheitsmodul (SM) bestimmt sind, wobei die Nachrichten von dem Zugangskontrollsystem (CAS) nach Empfang einer Anfrage nach einem Zugangsrecht auf ein Produkt erzeugt werden, das aus ausgestrahlten digitalen Daten besteht, wobei das Verfahren die folgenden Schritte umfasst:
- Kauf eines Produkts (P1), das von der Benutzereinheit vorgeschlagen wurde, und Prüfung durch das Sicherheitsmodul (SM), ob der Betrag für das Produkt (P1) durch ein Restguthaben gedeckt ist,
- Eintrag eines befristeten Rechts (D1t) in das Sicherheitsmodul (SM), wenn der Restguthaben gleich oder größer als der Betrag für das Produkt (P1) ist,
- Ermittlung eines Codes (CP1), der repräsentativ für das gekaufte Produkt (P1) ist,
- Anzeige des genannten Codes (CP1) auf einem Anzeigeelement, das mit der Benutzereinheit (STB) verbunden ist,
- Erstellung einer Anfrage (RQ), die mindestens den Code (CP1) und eine Kennung (ID_{SM}) des Sicherheitsmoduls (SM) umfasst,
- Übertragung der Anfrage (RQ) an ein Verwaltungszentrum (CG), das mit dem Zugangskontrollsystem (CAS) verbunden ist, über einen Kanal, der von der Benutzereinheit (STB) unabhängig ist
- Prüfung, durch das Zugangskontrollsystem (CAS), der Gültigkeit des Codes (CP1) und der Identifizierung des Sicherheitsmoduls (ID_{SM}), Erzeugung und Übertragung einer Rechtsbestätigungsnachricht (CEMM) mit einem Produktcode (CP1') für die Benutzereinheit (STB), die mit dem Sicherheitsmodul (SM) verbunden ist, nur dann, wenn die Prüfung der Gültigkeit des Codes (CP1) und der Identifizierung des Sicherheitsmoduls (ID_{SM}) erfolgreich war,
wobei das Verfahren **dadurch gekennzeichnet ist, dass** besagtes befristete Recht (D1t) durch ein endgültiges Recht (D1) ersetzt wird, wenn die Rechtsbestätigungsnachricht (CEMM), die von dem Zugangskontrollsystem (CAS) übertragen wurde, von der Benutzereinheit (STB) empfangen wird und wenn der Produktcode (CP1') dem gekauften Produkt (P1) entspricht, wobei das endgültige Recht (D1) den Zugang zu dem gekauften Produkt (P1) gestattet, unter Belastung des Betrags für das Produkt (P1).

2. Verfahren nach Anspruch 1, **dadurch gekennzeichnet, dass** der Produktcode (CP1') dem Code (CP1) in der Anfrage an das Verwaltungszentrum entspricht.

3. Verfahren nach einem der Ansprüche 1 oder 2, **dadurch gekennzeichnet, dass** der Code (CP1) in einer allgemeinen Verwaltungsnachricht über das ausgestrahlte oder auszustrahlende Produkt (P1) enthalten ist.

4. Verfahren nach einem der Ansprüche 1 bis 3, **dadurch gekennzeichnet, dass** die Anfrage (RQ) an das Verwaltungszentrum (CG) sowohl per Telefon in Form einer kurzen Nachricht übertragen wird oder durch einen Sprachserver, oder per Email oder jeden anderen vom Verwaltungszentrum unterstützten Kanal.

5. Verfahren nach einem der Ansprüche 1 oder 2, **dadurch gekennzeichnet, dass** der Code aus einem Kryptogramm Kp(ID_{SM}, IDP1), besteht, gebildet durch eine Kennung (IDP1) des gekauften Produkts (P1) und die Kennung (ID_{SM}) des Sicherheitsmoduls (SM), beide verschlüsselt mit einem persönlichen Schlüssel (Kp) der Benutzereinheit (STB).

6. Verfahren nach Anspruch 4, **dadurch gekennzeichnet, dass** die Anfrage (RQ) außerdem die Kennung (IDP1) des gekauften Produkts (P1) umfasst.

7. Verfahren nach einem der Ansprüche 1 bis 6, **dadurch gekennzeichnet, dass** das Zugangskontrollsystem (CAS) die Konformität des Codes (CP1) oder des Kryptogramms Kp(ID_{SM}, iDP1) und die Konformität der Identifizierung des Sicherheitsmoduls (SM) überprüft und die Sendung der Konformitätsnachricht (CEMM) an das Sicherheitsmodul (SM) nur dann zulässt, wenn die Prüfung positiv ausging.

8. Verfahren nach einem der Ansprüche 5 bis 7, **dadurch gekennzeichnet, dass** das Zugangskontrollsystem (CAS) bei Empfang der Anfrage (RQ) das Kryptogramm Kp(ID_{SM}, IDP1) neu berechnet, ausgehend von den Identifizierungen (ID_{SM}, IDP1) des Sicherheitsmoduls und des Produkts, und es mit dem Kryptogramm in der Anfrage (RQ) vergleicht; wenn das Ergebnis des Vergleichs positiv ist, überträgt das Zugangskontrollsystem (CAS) eine Bestätigungsnachricht (CEMM), die ein endgültiges Recht (D1) und eine Kennung des befristeten Rechts (D1t) als Voraussetzung für die Annahme der genannten Nachricht enthält.

## Claims

1. Method for validating access to a product (P1), by a security module (SM) associated with a user unit (STB) unidirectionally connected to an access control system (CAS) transmitting management messages addressed to said security module (SM), said messages being generated by the access control system (CAS) further to the receipt of a request for an access right to a product consisting in broadcasted digital data, said method comprising the following steps:
- purchasing a product (P1) proposed by the user unit and verification by the security module (SM) that a value amount associated with the product (P1) is covered by a remaining credit,
- registering a temporary right (D1t) in the security module (SM) when the remaining credit is equal or higher than the value amount associated with said product (P1),
- determining a code (CP1) representing the purchased product (P1),
- forming a request (RQ) comprising at least said code (CP1) and an identifier (ID_{SM}) of the security module (SM),
- transmitting the request (RQ) to the managing center (CG) associated with the access control system (CAS) via a channel independent from the user unit (STB),
- verifying by the access control system (CAS) the validity of the code (CP1) and the identifier of the security module (ID_{SM}), generating and transmitting a right confirmation message (CEMM) comprising a product code (CP1') addressed to the user unit (STB) associated with said security module (SM) only if the verification of the validity of the code (CP1) and the identifier of the security module (ID_{SM}) is successful,
the method is **characterized in that** said temporary right (D1t) is replaced by a definitive right (D1) when the right confirmation message (CEMM) transmitted by the access control system (CAS) is received by the user unit (STB) and when the product code (CP1') corresponds to the purchased product (P1), said definitive right (D1) authorizing access to the purchased product (P1) by debiting the amount associated with said product (P1).

2. Method according to the claim 1, **characterized in that** the product code (CP1') corresponds to the code (CP1) transmitted in the request addressed to the managing center.

3. Method according to claim 1 or 2, **characterized in that** the code (CP1) is contained in a general management message related to the broadcasted product (P1) or to a product to be broadcasted.

4. Method according to anyone of claims 1 to 3, **characterized in that** the request (RQ) is transmitted to the managing center (CG) either by phone in form of a short message or by means of a vocal server, by e-mail or any other channel supported by the managing center.

5. Method according to anyone of claims 1 or 2, **characterized in that** the code consists in a cryptogram Kp(ID_{SM}, IDP1), formed by an identifier (IDP1) of the purchased product (P1) and the identifier (ID_{SM}) of the security module (SM) encrypted with a personal key (Kp) of the user unit (STB).

6. Method according to claim 4 **characterized in that** the request (RQ) further comprises the identifier (IDP1) of the purchased product (P1).

7. Method according to anyone of claims 1 to 6, **characterized in that** the access control system (CAS) verifies the conformity of the code (CP1) or the cryptogram Kp(ID_{SM}, IDP1) and the conformity of the identifier of the security module (SM) and authorizes the sending of the confirmation message (CEMM) to said security module (SM) only if the verification is positive.

8. Method according to anyone of claims 5 to 7, **characterized in that** the access control system (CAS), on receipt of the request (RQ), recalculates the cryptogram Kp(ID_{SM}, IDP1) from the identifiers (ID_{SM}, IDP1) of the security module and of the product and compares it with the cryptogram contained in the request (RQ), when the result of the comparison is positive, the access control system (CAS) transmits a confirmation message (CEMM) containing a definitive right (D1) and an identifier of the temporary right (D1t) as acceptance condition of said message.
